# EUROPEAN PATENT SPECIFICATION

(11) **EP 0 549 759 B1**
(45) Date of publication and mention of the grant of the patent: **07.02.1996**
(21) Application number: 92914578.7
(22) Date of filing: 16.06.1992
(51) Int. Cl.: G01N 35/00, G01N 33/53

(54) **ASSAY MODULE TRANSFER APPARATUS FOR USE IN AN AUTOMATED ANALYTICAL INSTRUMENT**
VORRICHTUNG FUER DEN TRANSPORT VON PROBENTRAEGERN IN EINEM AUTOMATISCHEN ANALYSEGERAET
DISPOSITIF DE TRANSFERT DE MODULES D'ESSAI S'UTILISANT DANS UN INSTRUMENT D'ANALYSE AUTOMATISE

(30) Priority: 18.07.1991 US 732053
(43) Date of publication of application: 07.07.1993
(73) Proprietor: BEHRING DIAGNOSTICS INC., Westwood, MA 02090-2399 (US)
(72) Inventor: MACINDOE, Robert, C., Jr., Linwood, MA 01525 (US)
(74) Representative: Smulders, Theodorus A.H.J., Ir.
(86) International application number: US9205192
(87) International publication number: WO9302364

(56) References cited:
- EP-A- 0 042 338
- EP-A- 0 223 002
- DE-B- 2 755 264

## Description

### BACKGROUND OF THE INVENTION

The present invention relates generally to automated analytical instruments for use in conducting assays for a component of interest in a fluid sample and more particularly to automated analytical instruments which use assay modules for conducting assays for a component of interest in a fluid sample.

In recent years, a number of automated instruments have been developed for carrying out quantitative chemical and immunochemical analyses of fluid samples. As is known in the art, such instruments may be used to test various fluids for substances of interest, for example, to find evidence of disease, to monitor therapeutic drug levels, and the like. Typically, such automated analytical instruments utilize either liquid reagents or dry reagents to assay for a substance of interest. Various different types of assay devices are known for use in such automated instruments including, for example, dry, thin-film multilayer assay elements which are typically mounted in an assay module and capillary assay devices.

Generally speaking, the testing system portion of automated analytical instruments which use assay modules to test for a substance of interest typically includes a fluid dispensing system for metering out a quantity of the fluid sample to be analyzed to an assay module, a temperature controlled chamber for holding the assay modules at the appropriate temperature to allow the reaction to take place, an analyzing system for measuring a detectable change brought about by the presence of the substance of interest in the fluid sample and some mechanism for conveying the assay module to each of the foregoing components in the proper order.

The assay modules may be provided by various techniques. In U.S. Pat. No. 4,152,390, there is described an automated analytical instrument which includes, in addition to the testing system, a supply unit for holding a plurality of assay modules and a transfer apparatus for transferring an assay module from the supply unit to the testing system. The assay modules are stacked in containers, which may be received in a nest of the analyzing apparatus with a spring biased plunger arranged to enter the container through an opening. The plunger engages a movable element located in the container behind the stack of modules to urge the top module forwardly towards the testing system portion of the instrument. In another type of automated analytical instrument an assay module to be used is manually loaded into an assay module transfer device. The assay module is then transferred to the test system.

As can readily be appreciated, automated analytical instruments which include an automated mechanism for transferring assay modules stored within the instrument to the testing system are desirable since they do not require an operator to manually feed assay modules, one at a time, into the testing system.

It is an object of the present invention to provide a new and improved automated analytical instrument.

It is another object of this invention to provide an automated analytical instrument which includes a new and novel arrangement for transferring an assay module from an assay module supply apparatus to the testing system portion of the instrument.

It is still another object of this invention to provide an automated analytical instrument using assay modules wherein the assay modules are stored for use in magazines which are subdivided to form compartments, each compartment being adapted to hold a single assay module.

Additional objects, as well as features and advantages, of the present invention will be set forth in part in the description which follows, and in part will be obvious from the description or may be learned by practice of the invention. The objects, features, and advantages of the present invention may be realized and attained by means of the instrumentalities and combinations particularly pointed out in the appended claims.

Accordingly, to achieve the foregoing objects and in accordance with the purpose of the present invention as broadly set forth and embodied herein, an automated analytical instrument for use in conducting assays for a component of interest in a fluid sample is provided by the device defined in Claim 1.

### BRIEF DESCRIPTION OF THE DRAWINGS

The accompanying drawings, which are hereby incorporated into and constitute a part of this specification, illustrate the preferred embodiments of the invention and, together with the description, serve to explain the principles of the invention. In these drawings wherein like reference numerals represent like parts:
Fig. 1 is a perspective view partially exploded of one embodiment of an automated analytical instrument for measuring a component of interest in a fluid sample, the instrument being constructed according to the teachings of the present invention;
Fig. 2 is an enlarged perspective view of one type of the assay modules which maybe used in the automated instrument of the invention;
Fig. 3 is an enlarged perspective view of the temperature controlled chamber shown in Fig. 1 with the housing removed;
Fig. 4 is a side view of the assay module transfer apparatus shown in Fig. 1;
Fig. 5 is a top view of the assay module transfer apparatus shown in Fig. 4;
Fig. 6 is a back view of the assay module transfer unit shown in Fig. 4
Fig. 7 is a front view of the assay module transfer unit shown in Fig. 1 with the guide plate removed;
Fig. 8 is a perspective view from the left side of the assay module transfer unit shown in Fig. 4; and
Fig. 9 is a back view of the guide plate in the assay module transfor unit shown in Fig. 4.

### DETAILED DESCRIPTION OF PREFERRED EMBODIMENTS

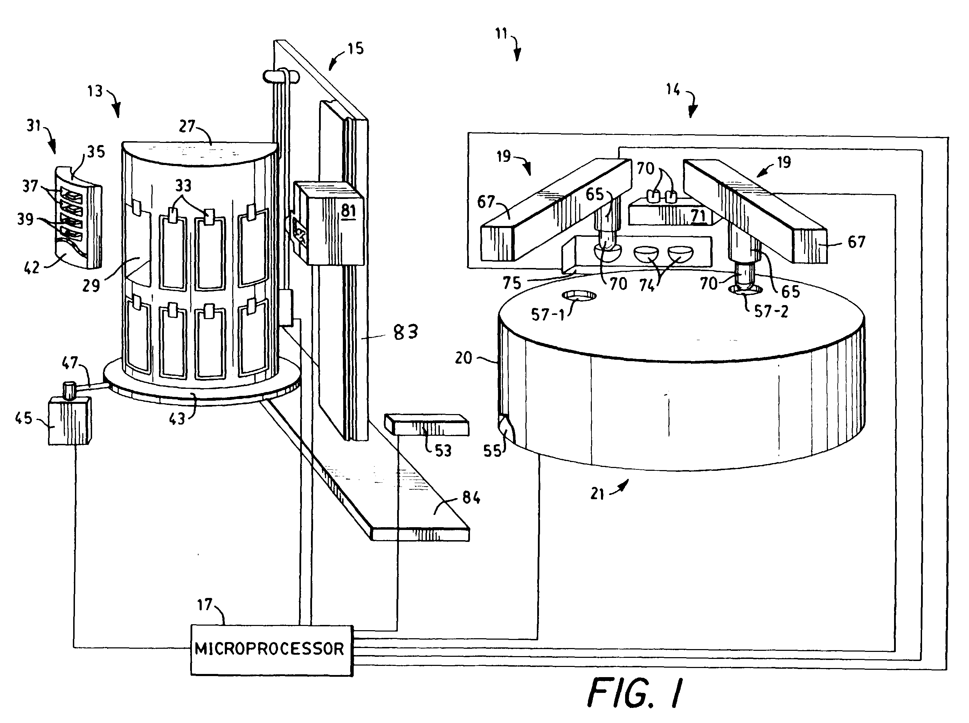

Referring now to Fig. 1, there is shown an embodiment of an automated analytical instrument for measuring a component of interest in a fluid sample, the instrument being constructed according to the teachings of the present invention and represented generally by reference numeral 11.

Instrument 11 includes an assay module supply apparatus 13 for holding a supply of assay modules, a testing system 14 which includes equipment for testing the fluid sample, an assay module transfer apparatus 15 for transferring an assay module from supply apparatus 13 to testing system 14 and a microprocessor 17 for processing and/or displaying the results obtained by testing system 14 and for controlling the operation of supply apparatus 13, testing system 14. In this preferred embodiment testing system 14 includes a pair of fluid dispensing units 19 for dispensing the fluid to be tested, a housing 20 which defines a temperature controlled chamber 21 for use in performing the testing, and a plurality of readout systems 23 for measuring the detectable change which is a function of the component of interest in the fluid sample, it being understood that the number of fluid dispensing units shown and the number of readout systems shown are by way of example only.

Assay module supply apparatus 13 includes a carousel 27 which is a semi-cylindrically shaped unit having a plurality of rectangularly shaped chambers 29 circumferentially spaced thereon in two rows. Of course, it is apparent that another such semi-cylindrically shaped carousel may be provided and further that these units may include any number of rows of chambers.

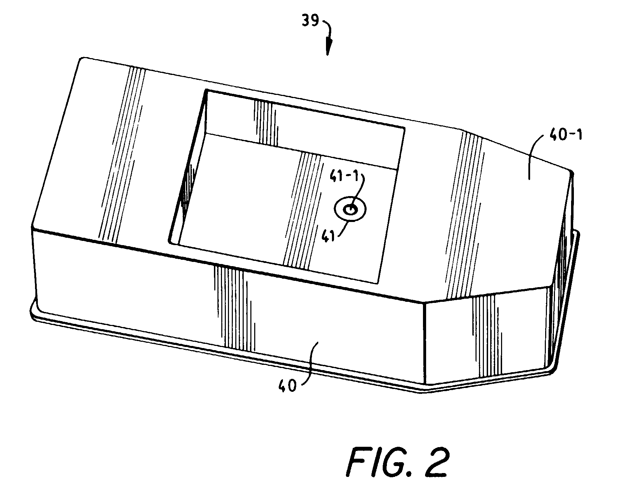

Supply apparatus 13 also includes a plurality of magazines 31, each magazine 31 being removably snap-locked into one of the chambers 29 by means of inwardly-biasing tabs 33 formed on carousel 27. Each magazine 31 comprises a rectangularly shaped, open-faced vessel 35 which is internally subdivided to define a plurality of compartments 37. As can be seen, when mounted in carousel 27 the compartments 37 within each magazine are disposed in vertical rows. An assay module 39 is removably stored in each compartment 37. A perspective view of one of the assay modules 39 is shown in Fig. 2. As can be seen, assay module 39 is an elongated boat shaped structure 40 having an inwardly tapered front end 40-1. An opening 41 is provided inside assay module 39 to access the reagent-bearing assay element 41-1 contained therein. A sheet of foil 42 (shown partially torn away) or other similar material suitable for preventing moisture from entering compartments 37 is preferably sealed over the open face of vessel 35.

Supply apparatus 13 further includes means for rotating carousel 27 about a vertical axis so that assay modules 39 in different magazines 31 can be accessed by assay module transfer apparatus 15 in the manner to be discussed below. In the embodiment shown, the rotating means comprises a rotatably mounted platform 43 on top of which carousel 27 is removably mounted. Platform 43 is turned by means of a motor 45, which is mechanically coupled through a belt 47 to a shaft (not shown) which is fixedly attached to platform 43. The rotational position of carousel 27 is controlled by microprocessor 17.

As can readily be appreciated, the capabilities of instrument 11 can be greatly expanded by loading one magazine 31 with assay modules 39 of a single specificity and others of the magazines with assay modules which are specific for other components of interest. By rotating carousel 27 such that an assay module 39 of a desired specificity can be positioned for removal by assay module transfer apparatus 15 it is possible to carry out assays for the various components automatically as desired.

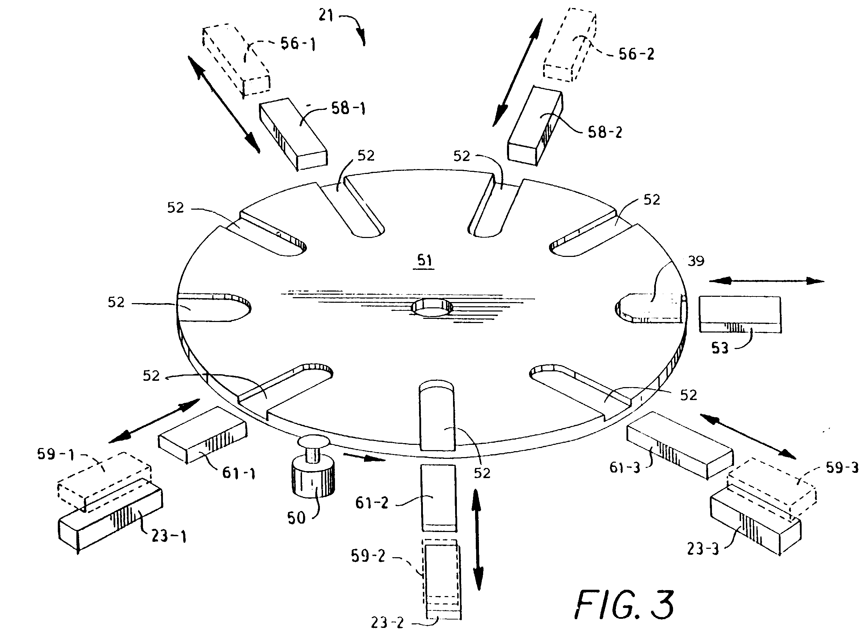

Referring now to Fig. 3, temperature controlled chamber 21 is shown in greater detail. Chamber 21, which may be any type of construction, includes a rotatably mounted turntable 51 driven by a motor 50. Turntable 51 includes a plurality of circumferentially spaced berths 52 each of which is adapted to receive an assay module 39. For simplicity, only a few of berths 52 are shown in Fig. 3. Assay modules 39 are loaded onto berths 52 using an automated shuttle mechanism 53. The shuttle mechanism 53, which in this preferred embodiment is located within chamber 21 includes a platform onto which the assay module is deposited by the transfer apparatus 15 through an entry port 55. The shuttle mechanism includes a slidably mounted element (not shown) which transports the assay module from the platform and positions it in a berth 52 on the turntable. The platform can be pivotally mounted so as to permit assay modules to be discarded after use. In such an embodiment the used assay module can be removed from the turntable at the same location where it was deposited on the turntable and dropped into a receptacle located below the platform. Shuttle mechanism 53 is powered by a motor (not shown).

Chamber 21 also includes a pair of metering stations 56-1 and 56-2, which are disposed radially outwardly a short distance from turntable 51. In the operation of the system, assay modules 39 disposed at metering stations 56 receive quantities of the fluid sample from fluid dispensing units 19 through a pair of openings 57-1 and 57-2 formed in the top wall of chamber 21. A pair of automated shuttle mechanisms 58-1 and 58-2 are used to transport assay modules 39 back and forth between turntable 51 and metering stations 56-1 and 56-2, respectively.

Chamber 21 further includes a plurality of read stations 59-1 through 59-3, which are also disposed radially a short distance from turntable 51. As will be seen below, analysis of the fluid samples is performed at read stations 59 using readout systems, one system 23 being at each read station 59. A plurality of automated shuttle mechanisms 61-1 through 61-3 are used to transport assay modules 39 back and forth between turntable 51 and read stations 59-1 through 59-3, respectively.

Both the rotation of turntable 51 and the actuation of automated shuttle mechanisms 53, 58, and 61 are controlled by microprocessor 17.

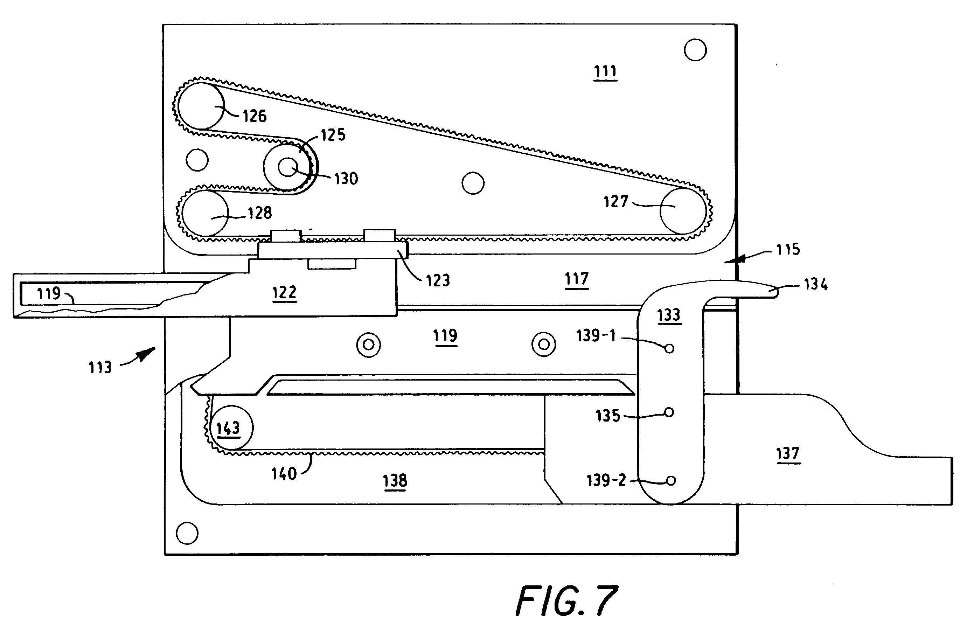

In operation an assay module is deposited into passageway 117 (shown in Fig. 7) through inlet 113 by the finger elements 121 of the pulling mechanism. During this step the pusher element 133 is retracted below passageway 117. Following the positioning of the assay module in passageway 117 the pusher element 133 pivots upwardly to engage the back wall of the assay module and pushes the module through the passageway and through outlet 115. During the path of travel through passageway 117, pusher element 133 pivots so as to increase the stroke, or the distance traveled, of the assay module. Thus, the assay module is desirably able to travel a greater linear distance than the yoke 137.

Referring back to Fig. 1, each fluid dispensing unit 19 is seen to include a pipette 65 which is operated by a motor-driven pipette assembly 67 which is controlled by microprocessor 17. In use, each pipette 65 picks up a disposable pipette tip 70 from a supply table 71, withdraws a quantity of the fluid sample from a fluid sample cup 74 held in a fluid sample cup holder 75 which travels back and forth between the pipettes 65 and then dispenses the quantities of the fluid sample into assay modules 39 located at metering stations 56.

During the assay procedure, as a result of the reaction(s) or interaction(s) between the sample fluid and the test reagent(s) which take place, a detectable change is effected corresponding to the presence of a component of interest in the sample fluid. The detectable change may be a color change which may be read spectrophotometrically such as with a densitometer or, in an assay method based on fluorescent-labeled species or one which involves the generation of a fluorescent species as a result of a reaction between test reagents, a fluorescent output signal can be generated and read spectrofluorometrically. Such detectable changes may be read from above or below the assay module. Readout system 23 is shown here below the assay module. The information obtained by readout system 23 is then transmitted to microprocessor 17 for processing, the results of which are displayed on a monitor (not shown) and/or printed out with a printer (also not shown).

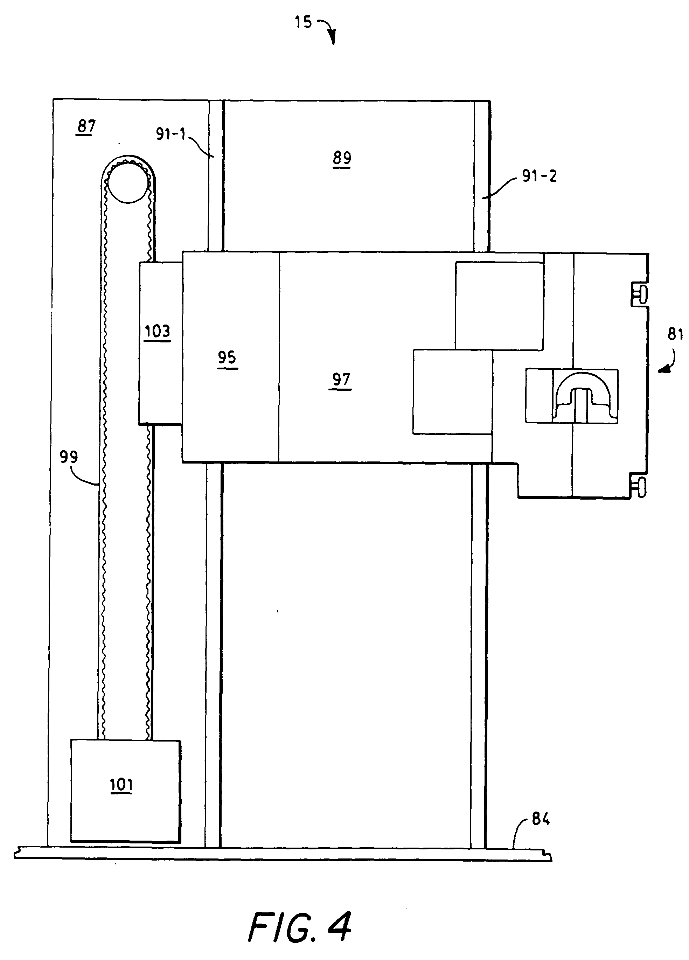

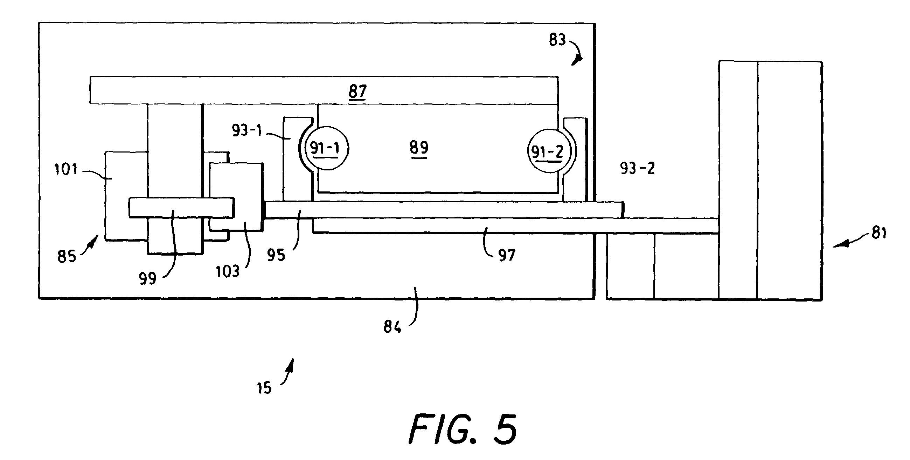

Referring now to Figs. 4 and 5, assay module transfer apparatus 15 is seen to include an assay module transfer unit 81, a support assembly 83 upon which assay module transfer unit 81 is slidably mounted and an automated mechanism 85 for moving unit 81 up and down on support assembly 83.

Support assembly 83 includes a base 84. An elongated, vertically disposed supporting frame 87 is fixedly mounted on base 84 and an elongated, vertically extending post 89 is fixedly mounted on frame 87. A pair of rods 91-1 and 91-2 are fixedly mounted on opposite sides of post 89.

Unit 81 is slidably mounted on rods 91-1 and 91-2 through a pair of elements 93-1 and 93-2 which are fixedly mounted on the back surface of a rectangular block 95. Block 95, in turn, is fixedly mounted on the back surface of a second rectangular block 97, which is fixedly mounted on the back of assay module transfer unit 81.

Mechanism 85 for moving assay module transfer unit 81 up and down along rods 91 includes a rotatably mounted belt 99 which is driven by a motor 101 and which is mechanically coupled to block 95 through a coupling element 103. The operation of motor 101 is controlled by microprocessor 17.

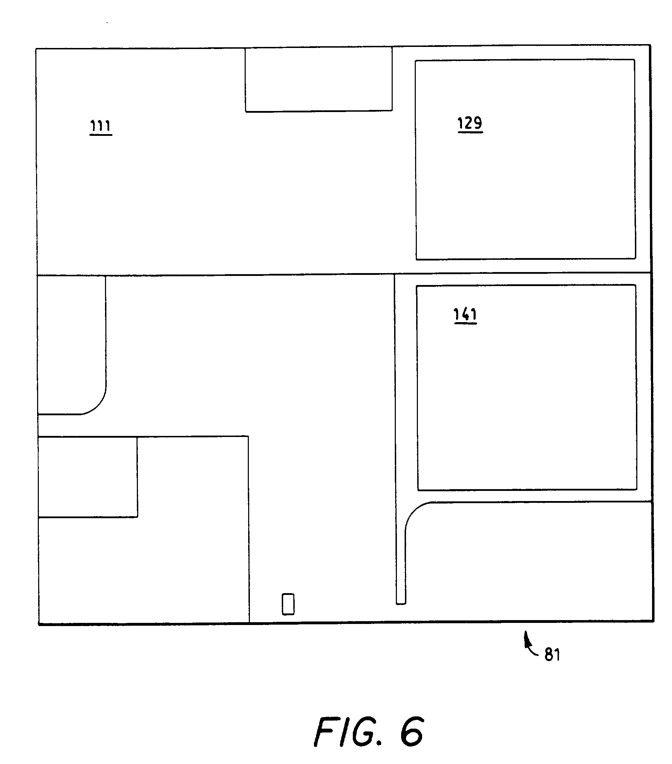

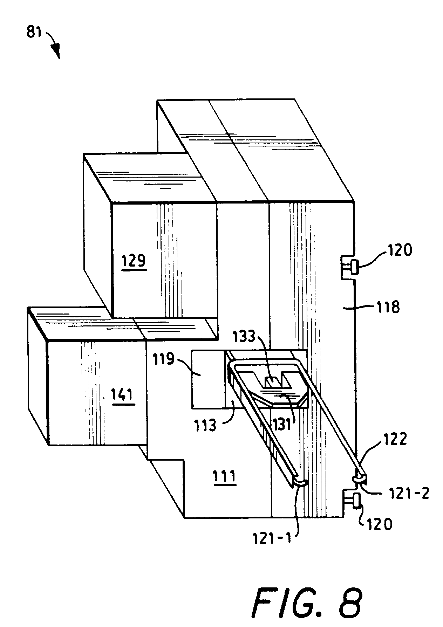

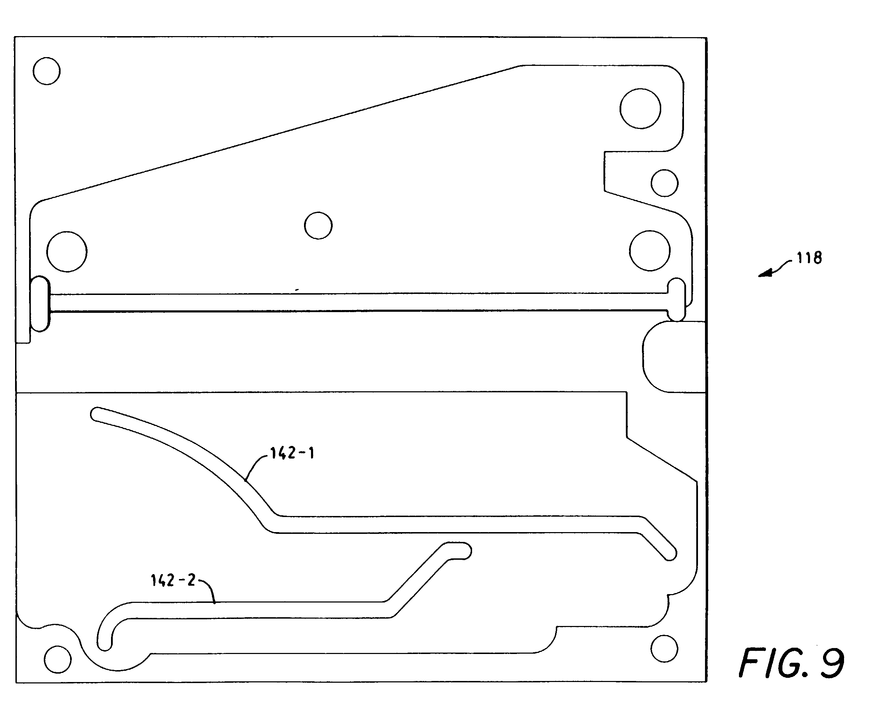

Referring now to Figs. 6-9, assay module transfer unit 81 and component parts thereof are shown in greater detail. As can be seen, unit 81 includes a generally rectangular, elongated block 111 having an inlet 113 at one end and an outlet 115 at an opposite end. Inlet 113 and outlet 115 are in communication with each other through a passageway 117. An elongated retaining plate 119, which extends from inlet 113 to outlet 115, is fixedly mounted on block 111. As will be seen below, plate 119 helps to retain an assay module within passageway 117 as it is pushed through. A generally rectangular guide plate 118 is fixedly secured to block 111 by bolts 120.

Assay module transfer unit 81 also includes a pulling mechanism which is mounted on block 111 for pulling an assay module 39 from carousel 27 into passageway 117 through inlet 113 and a pushing mechanism which is also mounted on block 111 for pushing the assay module 39 so obtained out of passageway 117 through outlet 115 into testing system 14.

The pulling mechanism includes a pair of spring biased finger elements 121-1 and 121-2 for engaging an assay module 39 in one of the compartments 37 in one of the magazines 31 in carousel 27 and then extracting the assay module 39 from the compartment. Finger elements 121 which are spring biased in an inward direction toward each other are fixedly mounted by any suitable means, not shown, on a U shaped supporting bracket 122 which is fixedly attached to a coupling plate 123. Plate 123 is fixedly attached by any suitable means, not shown, to an endless belt 124 which is mounted for movement along a path defined by wheels 125, 126, 127 and 128. Belt 124 is driven by a reversible stepping motor 129 whose output shaft 130 is fixedly attached to wheel 125. Operation of stepping motor 129 is controlled by microprocessor 17. The pulling mechanism also includes an extension plate 131 which is pivotally mounted on guide plate 118 and on retaining plate 119. Extension plate 131 serves as a cutting element for cutting foil 42 which in a preferred embodiment covers the opening of the compartment in the magazine to be accessed by finger elements 121 and also serves to provide a surface over which the assay module moves as it is transported from the magazine into assay module transfer unit 81.

The pushing mechanism which is adapted to push the assay module from behind out of passageway 117 through outlet 115 includes a pusher element 133 having an end 134 which extends into passageway 117. Pusher element 133 is pivotally mounted by a pin 135 to a yoke 137, which is slidably mounted in a track 138 formed in block 111 below passageway 117 . An endless bolt 140 is fixedly coupled to yoke 137 and moves yoke 137 back and forth along track 138. Microprocessor 17 controls the operation of motor 141 and, hence, the direction in which yoke 137 moves. A pair of pins 139-1 and 139-2 are fixedly mounted on pusher element 133 and travel in a pair of grooves 142-1 and 142-2, respectively, formed on guide plate 118. As can be seen, the shape and disposition of grooves 142 on plate 118 causes pusher element 133 to pivot upwardly as it approaches outlet 115.

To use instrument 11, the operator deposits a fluid sample into one or more of the fluid sample cups 74 in fluid sample cup holder 75 and directs microprocessor 17 to assay for a particular component of the fluid sample. Microprocessor 17 then directs motor 45 to rotate platform 43 so that a magazine 31 containing assay modules 39 specific for the component of interest is aligned with assay module transfer apparatus 15. In addition, microprocessor 17 directs motor assembly 101 to position unit 81 vertically so that it is aligned with a compartment 37 of the magazine 31 containing an assay module 39.

With unit 81 thus aligned with one compartment 37 in one magazine 31 on carousel 27, microprocessor 17 next actuates motor 129 to cause bracket 122 carrying finger elements 121 to move in the direction of that compartment. At the same time cutting element 131 is pivoted downwardly and outwardly, cutting into the foil sheet covering the compartment and exposing the assay module 39 contained therein. As fingers 121-1 and 121-2 move across the assay module, they will first be spread apart and then will engage the assay module from the rear. Microprocessor 17 then causes motor 129 to reverse direction, causing the assay module to be pulled out of the magazine 31 and into block 111 through inlet 113.

Once assay module 39 is disposed in passageway 117, microprocessor 17 turns off motor 129 and turns on motor 141. Motor 141 causes yoke 137 to slide across track 138, which in turn causes pusher element 133 to push assay module 39 through outlet 115 into shuttle mechanism 53 of testing system 14. Microprocessor 17 then directs motor 141 to reverse direction, causing yoke 137 to slide back to its original position on track 138.

## Claims

1. An automated analytical instrument (11) for use in conducting assays for a component of interest in a fluid sample, said automated analytical instrument (11) comprising:
a. an assay module supply apparatus (13) for holding a supply of assay modules (39), said assay module supply apparatus (13) comprising at least one magazine (31) having a plurality of compartments (37) arranged in a vertical row, each said compartment (37) adapted to hold an assay module (39);
b. a testing system (14) having equipment for testing of a fluid sample using an assay module (39), and
c. an assay module transfer apparatus (15) for transferring an assay module (39) from said assay module supply apparatus (13) to said testing system (14), said assay module transfer apparatus (15) comprising a support structure (83) extending vertically upward and an assay module transfer unit (81), said assay module transfer unit (81) having means for pulling an assay module (39) out from a compartment (37) of said magazine (31) and means for pushing an assay module so obtained into said testing system (14), wherein said assay module transfer unit (81) is slidably mounted on said support structure (83) for vertical movement along said support structure (83).

2. The automated analytical instrument (11) of claim 1 and wherein said assay module transfer unit (81) includes an elongated block (111) and said pulling means and said pushing means are mounted on said elongated block (111).

3. The automated analytical instrument (11) of claim 2 and wherein said pulling means comprises a pair of gripping fingers (121) for gripping an assay module (39).

4. The automated analytical instrument (11) of claim 3 and wherein said pulling means further comprises a belt (124) rotatably mounted on said elongated block (111), a motor (129) for driving said belt (124) and a plate (131) for coupling the belt (124) to the finger elements (121).

5. The automated analytical instrument (11) of claim 4 and wherein the motor (129) is a reversible motor.

6. The automated analytical instrument (11) of claim 2 and wherein the pushing means includes a pushing element (133) for pushing said assay module (39) out of said assay module transfer unit (81).

7. The automated analytical instrument (11) of claim 6 and wherein said pushing means further includes a yoke (137) slidably mounted on said elongated block (111) and said pushing element (133) is pivotally mounted on said yoke (137).

8. The automated analytical instrument (11) of claim 7 and wherein said pushing element (133) further includes a belt (140) rotably mounted on said elongated block (111) and a motor (141) for driving said belt (140) and wherein said yoke (137) is attached to said belt (140).

9. The automated analytical instrument (11) of claim 8 and further including a motor (101) coupled to said assay module transfer unit (81) for moving said assay module transfer unit (81) vertically along said support structure (83).

10. The automated analytical instrument (11) of claim 1 and wherein said assay module supply apparatus (13) comprises a carousel (27), a mechanism for turning said carousel (27) and a plurality of said magazines (31) removably mounted on said carousel (27).

## Patentansprüche

1. Automatisiertes analytisches Instrument (11) zur Durchführung von Analysen nach einer interessierenden Komponente in einer Flüssigkeitsprobe, wobei das automatisierte analytische Instrument (11) enthält:
a. eine Analysenmodul-Zufuhrvorrichtung (13) zum Halten eines Vorrats an Analysenmodulen (39), wobei die Analysenmodul-Zufuhrvorrichtung (13) mindestens ein Magazin (31) mit einer Vielzahl von Abteilen (37) enthält, die in einer vertikalen Reihe angeordnet sind, wobei jedes Abteil (37) ein Analysenmodul (39) aufnehmen kann;
b. ein Testsystem (14) mit Einrichtungen zum Testen einer Flüssigkeitsprobe unter Verwendung eines Analysenmoduls (39) und
c. eine Analysenmodul-Übertragungsvorrichtung (15) zum Übertragen eines Analysenmoduls (39) von der Analysenmodul-Zufuhrvorrichtung (13) zum Testsystem (14), wobei die Analysenmodul-Übertragungsvorrichtung (15) eine Halterung (83), die sich vertikal nach oben erstreckt, und eine Analysenmodul-Übertragungseinheit (81) enthält, wobei die Analysenmodul-Übertragungseinheit (81) eine Einrichtung zum Herausziehen eines Analysenmoduls (39) aus einem Abteil (37) des Magazins (31) und eine Einrichtung zum Einschieben eines so erhaltenen Analysenmoduls in das Testsystem (14) enthält, wobei die Analysenmodul-Übertragungseinheit (81) gleitfähig auf der Halterung (83) zur vertikalen Bewegung entlang der Halterung (83) angebracht ist.

2. Automatisiertes analytisches Instrument (11) nach Anspruch 1, worin die Analysenmodul-Übertragungseinheit (81) einen länglichen Block (111) enthält und die Einrichtungen zum Herausziehen und zum Einschieben auf dem länglichen Block (111) angebracht sind.

3. Automatisiertes analytisches Instrument (11) nach Anspruch 2, worin die Einrichtung zum Herausziehen ein Paar von Greiffingern (121) zum Ergreifen eines Analysenmoduls (39) enthält.

4. Automatisiertes analytisches Instrument (11) nach Anspruch 3, worin die Einrichtung zum Herausziehen weiterhin einen Riemen (124), der drehbar auf dem länglichen Block (111) angebracht ist, einen Motor (129) zum Antreiben des Riemens (124) und eine Platte (131) zum Kuppeln des Riemens (124) mit den Fingerelementen (121) enthält.

5. Automatisiertes analytisches Instrument (11) nach Anspruch 4, worin der Motor (129) ein Umkehrmotor ist.

6. Automatisiertes analytisches Instrument (11) nach Anspruch 2, worin die Einrichtung zum Einschieben ein Element (133) zum Drücken des Analysenmoduls (39) aus der Analysenmodul-Übertragungseinheit (81) enthält.

7. Automatisiertes analytisches Instrument (11) nach Anspruch 6, worin die Einrichtung zum Einschieben weiterhin ein Joch (137) enthält, das gleitend auf dem länglichen Block (111) angebracht ist, und worin das Drückelement (133) schwenkbar auf dem Joch (137) angebracht ist.

8. Automatisiertes analytisches Instrument (11) nach Anspruch 7, worin das Drückelement (133) weiterhin einen Riemen (140), der drehbar auf dem länglichen Block (111) angebracht ist, und einen Motor (141) zum Antrieb des Riemens (140) enthält, und worin das Joch (137) mit dem Riemen (140) verbunden ist.

9. Automatisiertes analytisches Instrument (11) nach Anspruch 8, weiterhin enthaltend einen Motor (101), der mit der Analysenmodul-übertragungseinheit (81) verbunden ist, um die Analysenmodul-Übertragungseinheit (81) vertikal entlang der Halterung (83) zu bewegen.

10. Automatisiertes analytisches Instrument (11) nach Anspruch 1, worin die Analysenmodul-Zufuhrvorrichtung (13) ein Karussell (27), einen Mechanismus zum Drehen des Karussells (27) und eine Vielzahl von Magazinen (31) enthält, die entfernbar auf dem Karussell (27) angebracht sind.

## Revendications

1. Appareil (11) d'analyse automatique, à utiliser pour effectuer des analyses sur un composant objet d'intérêt dans un échantillon de fluide, ledit appareil (11) d'analyse automatique comprenant :
a) un dispositif (13) pourvoyeur de modules d'essai, destiné à maintenir un lot de modules d'essai (39), ledit dispositif (13) pourvoyeur de modules d'essai comprenant au moins un chargeur (31) qui comporte une pluralité de compartiments (37) disposés en une rangée verticale, chaque compartiment (37) pouvant contenir un module d'essai (39),
b) un dispositif testeur (14) équipé pour tester un échantillon de fluide en utilisant un module d'essai (39), et
c) un dispositif (15) de transfert des modules d'essai, servant à transférer un module d'essai (39) dudit dispositif (13) pourvoyeur de modules d'essai audit dispositif testeur (14), ledit dispositif (15) de transfert des modules d'essai comprenant une structure de support (83) qui s'étend verticalement vers le haut et une unité (81) de transfert des modules d'essai, ladite unité (81) de transfert des modules d'essai comportant un moyen pour extraire un module d'essai (39) d'un compartiment (37) dudit chargeur (31) et un moyen pour pousser un module d'essai ainsi obtenu dans ledit dispositif testeur (14), sachant que ladite unité (81) de transfert des modules d'essai est montée de façon coulissante sur ladite structure de support (83) en vue d'un déplacement vertical le long de ladite structure de support (83).

2. Appareil (11) d'analyse automatique selon la revendication 1. dans lequel ladite unité (81) de transfert des modules d'essai comprend un bloc allongé (111) et lesdits moyens d'extraction et de poussée sont montés sur ledit bloc allongé (111).

3. Appareil (11) d'analyse automatique selon la revendication 2, dans lequel ledit moyen d'extraction comprend une paire de doigts de préhension (121) servant à saisir un module d'essai (39).

4. Appareil (11) d'analyse automatique selon la revendication 3. dans lequel ledit moyen d'extraction comprend en outre une courroie (124) montée de façon à pouvoir tourner sur ledit bloc allongé (111), un moteur (129) pour entraîner ladite courroie (124) et une plaque (131) pour coupler ladite courroie (124) auxdits doigts de préhension (121).

5. Appareil (11) d'analyse automatique selon la revendication 4, dans lequel ledit moteur (129) est un moteur inversible.

6. Appareil (11) d'analyse automatique selon la revendication 2, dans lequel ledit moyen de poussée comprend un organe pousseur (133) pour pousser ledit module d'essai (39) hors de ladite unité (81) de transfert des modules d'essai.

7. Appareil (11) d'analyse automatique selon la revendication 6, dans lequel ledit moyen de poussée comprend en outre un étrier (137) monté de façon coulissante sur ledit bloc allongé (111) et ledit organe pousseur (133) est monté de façon pivotante sur ledit étrier (137).

8. Appareil (11) d'analyse automatique selon la revendication 7, dans lequel ledit organe pousseur (133) comprend cn outre une courroie (140) montée de façon à pouvoir tourner sur ledit bloc allongé (111) et un moteur (141) pour entraîner ladite courroie (140) et dans lequel ledit étrier (137) est fixé à ladite courroie (140).

9. Appareil (11) d'analyse automatique selon la revendication 8, comprenant en outre un moteur (101) couplé à ladite unité (81) de transfert des modules d'essai pour déplacer verticalement ladite unité (81) de transfert des modules d'essai le long de ladite structure de support (83).

10. Appareil (11) d'analyse automatique selon la revendication 1, dans lequel ledit dispositif (13) pourvoyeur de modules d'essai comprend un carrousel (27), un mécanisme pour faire tourner ledit carrousel (27) et une pluralité de chargeurs (31) montés de façon amovible sur ledit carrousel (27).
